# EUROPEAN PATENT APPLICATION

(11) **EP 3 217 675 A1**
(43) Date of publication of application: **13.09.2017**
(21) Application number: 17153655.0
(22) Date of filing: 30.01.2017
(51) Int. Cl.: H04N 21/418, H04N 21/426, H04N 21/436, H04N 21/442, H04N 21/4425

(54) **BROADCAST RECEIVER, INPUT METHOD, AND CONTROL PROGRAM**

(30) Priority: 10.03.2016 JP 2016047579
(71) Applicant: Panasonic Intellectual Property Management Co., Ltd., Osaka-shi, Osaka 540-6207 (JP)
(72) Inventor: MINODA, Atsushi, Osaka, 540-6207 (JP); FUJIISHI, Shuji, Osaka, 540-6207 (JP); MORIIE, Yoshihiro, Osaka, 540-6207 (JP)
(74) Representative: Vigand, Philippe

(57) **Abstract**

Provided is a broadcast receiver capable of inhibiting interruption of output of a signal related to a transport stream (TS) which is being decrypting at one of CAMs connected to CI slots. Broadcast receiver (100) includes: first and second receiving units (111, 112) that receive broadcast signals and output TSs; switch (150) that selectively inputs the TSs that are output from the receiving units into CI slots connected with CAMs; decoder (140) that decodes signals that are output from the CAMs connected to the CI slots to determine whether results of decryption performed by the CAMs are normal or not; and controller (160) that controls switch (150) to input a first TS that is output from one of the receiving units into each of the CI slots to which each of the CAMs capable of decrypting the plurality of TSs is connected, and when a determination result of decoder (140) is not normal based on the signal that is output from the CAM, controller (160) changes switch (150) to input the first TS into the other CI slot.

## Description

### FIELD

The present disclosure relates to a broadcast receiver that receives an encrypted broadcast signal.

### BACKGROUND

A broadcast receiver that receives European digital broadcasting uses a digital video broadcasting common interface (DVB-CI) standard for watching paid broadcasting that uses a signal encrypted by scramble processing or the like. Under the DVB-CI standard, the broadcast receiver includes a common interface (CI) slot. Into the CI slot, a card-shaped conditional access module (CAM) is inserted (mounted) and connected to decrypt the encrypted signal. A subscriber of certain paid broadcasting can watch the paid broadcasting by using the CAM (hereinafter also referred to as a card module) capable of decrypting the signal of the paid broadcasting.

Patent Literature 1 discloses a broadcast receiver including two tuners (receiving units) and two CI slots that enable watching of two types of paid broadcasting that require contract. The CAMs connected to the CI slots decrypt transport streams (TSs) that are output from the tuners that select paid broadcasting and receive broadcast signals. The broadcast receiver according to Patent Literature 1 enables a user to watch broadcasting even if the user makes a mistake in correspondence between the tuners and the CAMs. That is, the broadcast receiver according to Patent Literature 1 enables the user to watch paid broadcasting even if the user inserts each CAM corresponding to one of the two tuners into any one of the two CI slots.

While the CAM is a card module that has a function to decrypt the TS, version 1.4 of the DVB-CI Plus standard prescribes a new CAM that has a function to decrypt a plurality of TSs in addition to the single TS. Hereinafter, the card module (CAM) that can decrypt only single TS is referred to as a single-card module, whereas the card module (CAM) that can decrypt multiple TSs is referred to as a multi-card module.

### Citation List

### Patent Literature

PTL 1: European Patent Application Publication No. 2757796

### Non-Patent Literatures

NPL1: EUROPEAN STANDARD EN50221, Common Interface Specification for Conditional Access and other Digital Video Broadcasting Decoder Applications, English Version, Ref. No. EN50221: 1996E, February 1997
NPL2: Digital Video Broadcasting (DVB); Extensions to the CI Plus Specification, ETSI TS 103 205 V1.1.1, March 2014
NPL3: Digital Video Broadcasting (DVB); Extensions to the CI Plus Specification (CI Plus 1.4), DVB Document A165, June, 2015

### SUMMARY

### TECHNICAL PROBLEM

While the TS from a first tuner X in the broadcast receiver according to Patent Literature 1 is normally decrypted by the single-card module connected to a slot A, which is a first CI slot, is decoded by a decoder, and is output to a display device or the like, when the TS from a second tuner Y is not decrypted normally by the card module connected to a slot B, which is a second CI slot, the following problem occurs.

Since changing the correspondence between the tuners and the card modules may enable normal decryption of the two TSs, verification is performed whether the TS from the tuner Y can be decrypted by the single-card module connected to the slot A. Satisfaction of certain conditions through this verification may enable watching of paid broadcasting related to the two TSs. However, while the display device or the like is receiving output of broadcast content (content as a broadcast program) decoded based on a result of decryption of the TS from the tuner X by the single-card module connected to the slot A, using the single-card module connected to the slot A for verification of the decryption of the TS from the tuner Y causes temporary interruption of the output of the content based on the TS that is already being output from the tuner X.

The present disclosure provides a broadcast receiver that enables watching of paid broadcasting when the single-card module is connected to a first interface of the plurality of interfaces (CI slots) and the multi-card module is connected to a second interface, the broadcast receiver also enabling inhibition of interruption of the content output related to the decrypted TS.

### SOLUTION TO PROBLEM

A broadcast receiver according to the present disclosure includes: a first receiving unit that receives a broadcast signal and outputs a TS; a second receiving unit that receives a broadcast signal and outputs a TS; a first interface connected with a card module that decrypts an input TS and outputs a decrypted signal, the first interface inputting the input TS into the card module; a second interface connected with a card module that decrypts an input TS and outputs a decrypted signal, the second interface inputting the input TS into the card module; a switch that selectively inputs the TSs that are output from the first receiving unit and the second receiving unit into the first interface and the second interface; a decoder that decodes a signal that is output from the card module connected to one of the first interface and the second interface to determine whether a result of decryption performed by the card module is normal or not; and a controller that controls the switch to input a first TS that is output from one receiving unit of the first receiving unit and the second receiving unit into one interface of the first interface and the second interface to which a multi-card module capable of decrypting the plurality of TSs is connected, when a determination result of the decoder is not normal based on the signal that is output from the multi-card module connected to the one interface, the controller changing the switch to input the first TS into the other interface of the first interface and the second interface.

Also, an input method according to the present disclosure is an input method for selectively inputting TSs into a plurality of card modules in a broadcast receiver connected with the card modules each of which decrypts input TS and outputs decrypted signal, the broadcast receiver decoding signal that is output from each of the card modules, the input method including: a first step of inputting a first TS into a multi-card module capable of decrypting the plurality of TSs among the card modules connected to the broadcast receiver; and a second step of determining whether a result of decryption performed by the multi-card module is normal or not based on the signal that is output from the multi-card module after performing the input in the first step, and inputting the first TS into the card module other than the multi-card module among the card modules when a result of the determination is not normal.

Also, a control program according to the present disclosure is a control program for causing a microprocessor in a broadcast receiver to perform selection input processing for selectively inputting TSs into a plurality of card modules, the broadcast receiver being connected with the card modules each of which decrypts input TS and outputs decrypted signal and decoding signal that is output from each of the card modules, the selection input processing including: a first step of inputting a first TS into a multi-card module capable of decrypting the plurality of TSs among the card modules connected to the broadcast receiver; and a second step of determining whether a result of decryption performed by the multi-card module is normal or not based on the signal that is output from the multi-card module after performing the input in the first step, and inputting the first TS into the card module other than the multi-card module among the card modules when a result of the determination is not normal.

### ADVANTAGEOUS EFFECTS

The broadcast receiver according to the present disclosure allows a user to watch two types of paid broadcasting by connecting the single-card module and the multi-card module, and allows inhibition of interruption of content output.

### BRIEF DESCRIPTION OF DRAWINGS

FIG. 1 is a schematic diagram illustrating one example of a broadcast receiving system including a broadcast receiver according to a first exemplary embodiment;
FIG. 2 is a functional block diagram of the broadcast receiver according to the first exemplary embodiment;
FIG. 3 is a flowchart illustrating an operational example of the broadcast receiver according to the first exemplary embodiment;
FIG. 4 is a flowchart illustrating switch control processing in the broadcast receiver according to the first exemplary embodiment (to be continued to FIG. 5); and
FIG. 5 is a flowchart illustrating the switch control processing in the broadcast receiver according to the first exemplary embodiment (continued from FIG. 4).

### DESCRIPTION OF EMBODIMENTS

In order to enable watching of two types of paid broadcasting when a single-card module is connected to one interface of two interfaces (CI slots) and a multi-card module is connected to the other interface, and to inhibit interruption of output of broadcast content (content), a broadcast receiver according to the present disclosure includes: a first receiving unit that receives a broadcast signal and outputs a TS; a second receiving unit that receives a broadcast signal and outputs a TS; a first interface connected with a card module that decrypts an input TS and outputs a decrypted signal, the first interface inputting the input TS into the card module; a second interface connected with a card module that decrypts an input TS and outputs a decrypted signal, the second interface inputting the input TS into the card module; a switch that selectively inputs the TSs that are output from the first receiving unit and the second receiving unit into the first interface and the second interface; a decoder that decodes a signal that is output from the card module connected to one of the first interface and the second interface to determine whether a result of decryption performed by the card module is normal or not; and a controller that controls the switch to input a first TS that is output from one receiving unit of the first receiving unit and the second receiving unit into one interface of the first interface and the second interface to which a multi-card module capable of decrypting a plurality of TSs is connected, when a determination result of the decoder is not normal based on a signal that is output from the multi-card module connected to the one interface, the controller changing the switch to input the first TS into the other interface of the first interface and the second interface.

This allows the multi-card module to decrypt the first TS, and thus defining the high-priority TS as the first TS and using the first TS allows inhibition of interruption of a signal flow when decrypting the first TS and decoding the first TS by the decoder. This is because, for example, during decoding of the first TS, when the card module other than the multi-card module decrypts the relatively low-priority TS and verifies that the decryption is not normal, even if the multi-card module receives the low-priority TS, the multi-card module can also decrypt the low-priority TS while performing the decryption of the first TS continuously.

Here, for example, when the determination result of the decoder is normal based on the signal that is output from the multi-card module connected to the one interface, the controller may control the switch to input, into the other interface, a second TS that is output from the receiving unit of the first receiving unit and the second receiving unit that does not output the first TS, and when the determination result of the decoder based on the signal that is output from the card module connected to the other interface is not normal, the controller may change the switch to input the second TS into the one interface.

Accordingly, during decoding of the first TS, when the second TS received by the other receiving unit other than the first TS received by one of the first receiving unit and the second receiving unit is decrypted by the card module other than the multi-card module, and when the decryption is not normal, as the second TS is input into the multi-card module, inhibiting interruption of decoding of the first TS. If decoding of the first TS is interrupted, that is, in a transmission path of a signal based on the received broadcast signal until decoding inside the broadcast receiver, if the signal does not flow appropriately and is stopped, for example, processing such as display and recording of broadcast content (content) based on the broadcast signal become impossible at least temporarily.

Also, for example, while the controller controls the switch to input the first TS into the multi-card module, when inputting the second TS into the multi-card module, the controller may control the switch to input the second TS into the multi-card module while keeping a bandwidth used for input of the first TS.

This can inhibit, while the broadcast receiver decodes the first TS, quality deterioration and so on due to reduction in a bit rate of the first TS signal during the decoding caused by verification whether the decryption of the second TS is normal or not.

Also, for example, the broadcast receiver further includes an operation receiving unit that receives a user operation, wherein in response to the user operation received by the operation receiving unit, the controller may select the TS that is output from one of the first receiving unit and the second receiving unit as the first TS to perform the control of the switch.

This enables selection of the TS of which interruption should be inhibited according to the user operation.

Also, for example, the controller may select the TS that is output from the first receiving unit as the first TS to perform the control of the switch.

This leads to control of the switch with priority to prevent interruption of the TS related to the broadcast received by the first receiving unit, and the user causes the first receiving unit to receive an important broadcast program and the like, preventing interruption of the important broadcast program and the like.

Also, for example, when the result of the decryption performed by the card module is normal, the decoder may transmit a result of the decoding to a display device.

This allows the TS to be decoded and displayed on the display device. While the high-priority first TS is displayed on the display device, interruption of the display can be inhibited.

Also, an input method according to the present disclosure is an input method for selectively inputting TSs into a plurality of card modules in a broadcast receiver connected with the card modules each of which decrypts input TS and outputs decrypted signal, the broadcast receiver decoding signal that is output from each of the card modules, the input method including: a first step of inputting a first TS into a multi-card module capable of decrypting a plurality of TSs among the card modules connected to the broadcast receiver; and a second step of determining whether a result of decryption performed by the multi-card module is normal or not based on a signal that is output from the multi-card module after performing the input in the first step, and inputting the first TS into a card module other than the multi-card module among the card modules when a result of the determination is not normal.

Accordingly, the first TS is first decrypted by the multi-card module, and thus defining the high-priority TS as the first TS for use inhibits interruption of decryption of the first TS.

Here, for example, the input method may further include: a third step of inputting a second TS other than the first TS into the card module other than the multi-card module, when the determination is made that the result of the decryption performed by the multi-card module is normal based on the signal that is output from the multi-card module in the second step; and a fourth step of, after performing the input in the third step, determining whether the result of the decryption performed by the card module other than the multi-card module is normal or not based on the signal that is output from the card module other than the multi-card module, and inputting the second TS into the multi-card module among the card modules when the result of the determination is not normal.

Accordingly, while the first TS is input into the multi-card module, when the second TS other than the first TS is decrypted by the card module other than the multi-card module and the decryption is not normal, the second TS is input into the multi-card module, and thus interruption of decryption of the first TS can be inhibited.

Also, the control program according to the present disclosure is a control program for causing a microprocessor in a broadcast receiver to perform selection input processing for selectively inputting TSs into a plurality of card modules, the broadcast receiver being connected with the card modules each of which decrypts input TS and outputs decrypted signal and decoding signal that is output from each of the card modules, the selection input processing including: a first step of inputting a first TS into a multi-card module capable of decrypting a plurality of TSs among the card modules connected to the broadcast receiver; and a second step of determining whether a result of decryption performed by the multi-card module is normal or not based on a signal that is output from the multi-card module after performing the input in the first step, and inputting the first TS into a card module other than the multi-card module among the card modules when a result of the determination is not normal.

Accordingly, the broadcast receiver including the processor into which this control program is installed and executed causes the multi-card module to decrypt the first TS, and thus defining the high-priority TS as the first TS for use enables inhibition of interruption of a signal flow when the first TS is decrypted and decoded by the decoder.

These comprehensive or specific aspects may include one or more combinations of a device, a system, a method, an integrated circuit, a computer program, a computer-readable recording medium, and the like.

Exemplary embodiments will be described in detail below with reference to the drawings as needed. However, a description more detailed than necessary may be omitted. For example, a detailed description of already well-known matters and a repeated description regarding substantially identical components may be omitted. This is intended to avoid making the following description unnecessarily redundant and to make it easier for a person skilled in the art to understand the exemplary embodiments.

It is to be noted that the inventors provide the accompanying drawings and the following description in order for a person skilled in the art to fully understand the present disclosure, and do not intend to limit the subject described in the appended claims. That is, numerical values, shapes, components, disposition and connection forms of the components, steps (processes), order of the steps, and the like described in the following description using specific examples are merely one example, and are not intended to limit the subject described in the appended claims. Among components described in the following exemplary embodiments, components that are not described in an independent claim are components that may be arbitrarily added. Also, each diagram is a schematic view and is not necessarily illustrated strictly.

### FIRST EXEMPLARY EMBODIMENT

A broadcast receiver used in a broadcast receiving system according to a first exemplary embodiment will be described below with reference to the drawings.

### [1-1. Configuration]

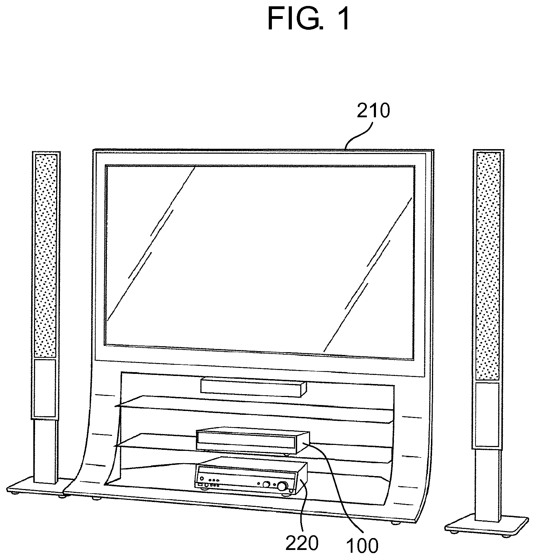

FIG. 1 is a schematic diagram illustrating one example of a broadcast receiving system according to the first exemplary embodiment.

The broadcast receiving system illustrated in FIG. 1 is a system for watching content including a broadcasted video and voice, and includes broadcast receiver 100, display device 210, and recording device 220. In the broadcast receiving system of FIG. 1, broadcast receiver 100 is used as a set top box (STB) that receives a broadcast signal and outputs broadcast content (content).

Broadcast receiver 100 includes, for example, a processor (microprocessor), a memory, a broadcast receiving circuit (tuner), a communication interface, and a user interface. The communication interface is, for example, a communication circuit for giving and receiving information with other devices. The memory is, for example, a ROM or a RAM, and may include a nonvolatile memory. The memory can previously store information such as a control program for implementing processing of each functional component described later and a setting value to be used by the control program. The memory can also be used for temporarily storing each value to be used for execution of the control program by the processor. Also, broadcast receiver 100 complies with the DVB-CI standard and the DVB-CI Plus standard, and includes CI slots. Card modules (CAM: Conditional Access Module) inserted (mounted) and connected to the CI slots decrypt encrypted signals related to paid broadcasting received by receiving units (such as tuners and communication interfaces) from an antenna, cable, and the like (not illustrated). The broadcast signal received by broadcast receiver 100 is a signal of digital broadcasting formed by modulating a TS. The broadcast signal may be a signal broadcasted (transmitted) by any one of various broadcast standards, for example, terrestrial broadcasting, broadcasting satellite (BS) broadcasting, communication satellite (CS) broadcasting, Internet broadcasting, and cable television. In digital broadcasting, broadcast content (content) is multiplexed and transmitted with the TS that complies with the Moving Picture Experts Group 2 (MPEG 2) system standard. In response to a channel selection operation or other operations made by a user, broadcast receiver 100 receives the broadcast signal and outputs a signal related to the broadcast content (content). The content-related signal that is output from broadcast receiver 100 is transmitted to display device 210 including a display screen and recording device 220, which is a recording-playback device or the like, via a cable or the like (not illustrated). This allows the user, for example, to watch the broadcast content (content) displayed on display device 210, and to cause recording device 220 to record the content.

Display device 210 displays a video of the content on the display screen in response to the signal transmitted from broadcast receiver 100, and for example, outputs a voice of the content from a speaker or other devices. This display is, for example, a liquid crystal display, a plasma display, an organic electroluminescence (EL) display, or other display device.

Recording device 220 includes a storage medium (recording medium), such as a memory and a hard disk, for example. Recording device 220 records data (content data) related to the signal transmitted from broadcast receiver 100 on the recording medium, and then transmits a signal for playing the content based on the recorded data to display device 210 in response to a user operation or the like.

Broadcast receiver 100 in the above-described broadcast receiving system will be described in detail below.

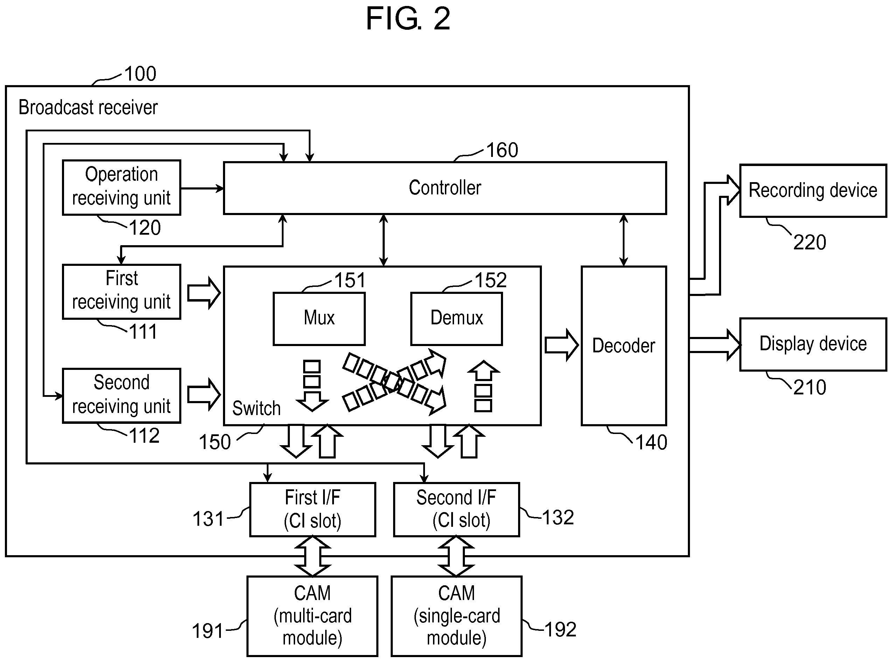

FIG. 2 is a functional block diagram of broadcast receiver 100. In addition to broadcast receiver 100, FIG. 2 illustrates CAMs 191, 192 to be inserted into (that is, connected to) the CI slots of broadcast receiver 100, and display device 210 and recording device 220 connected to broadcast receiver 100 by a cable or the like.

Broadcast receiver 100 includes first receiving unit 111, second receiving unit 112, operation receiving unit 120, first interface (I/F) 131, second I/F 132, decoder 140, switch 150, and controller 160, as illustrated in FIG. 2.

First receiving unit 111 is implemented by a tuner, a communication interface, or other elements. First receiving unit 111 has a function to receive the broadcast signal via the antenna, cable, and the like, and to output the specified TS extracted from the broadcast signal under control of controller 160 in response to a user operation or the like. For example, the tuner can obtain the TS and output the obtained TS to switch 150 by performing tuning and demodulation on the broadcast signal related to a broadcast wave of digital broadcasting received by the antenna in accordance with the predetermined broadcast standard. Here, examples of the predetermined broadcast standard include a digital video broadcasting-terrestrial (DVB-T) standard, a digital video broadcasting-second generation terrestrial (DVB-T2) standard, a digital video broadcasting-cable (DVB-C) standard, a digital video broadcasting-satellite (DVB-S) standard, and a digital video broadcasting satellite-second generation (DVB-S2) standard. Also, for example, the communication interface can obtain the TS and output the obtained TS to switch 150 by receiving the broadcast signal transmitted through a network, such as the Internet, in accordance with a predetermined communications protocol. Second receiving unit 112 has a function similar to the function of first receiving unit 111; both first receiving unit 111 and second receiving unit 112 do not necessarily need to be able to receive the broadcast signal from an identical broadcasting station (broadcast signal source). For example, first receiving unit 111 may receive the specified broadcast signal from the broadcast wave received with the antenna, whereas second receiving unit 112 may receive the broadcast signal of cable television via the cable or the broadcast signal of Internet broadcasting. Also, for example, first receiving unit 111 may be able to receive the broadcast signal from broadcasting station A and broadcasting station B, while second receiving unit 112 may be able to receive the broadcast signal from broadcasting station B and broadcasting station C. With first receiving unit 111 and second receiving unit 112, broadcast receiver 100 can receive separate broadcast content (content) simultaneously from two different broadcasting stations or the like, and can process two TSs in parallel.

Operation receiving unit 120 has a function to receive a user operation, such as selection of a broadcast to receive (channel selection), with the user interface provided in an enclosure of broadcast receiver 100, such as a button and switch, and to convey the user operation to controller 160. The user interface may be a graphical user interface (GUI) that uses a display. Also, operation receiving unit 120 may include, for example, a receiver of an infrared remote-control signal, and may receive a signal related to the user operation, such as button depression of a remote-controller, from the remote-controller and convey the received signal to controller 160.

First I/F 131 includes the CI slot and the like, and has a function to input the TS that is input from switch 150 into the card module (CAM) inserted into (connected to) the CI slot. Second I/F 132 has a function similar to the function of first I/F 131. The card module to be inserted into the CI slot includes a decryption circuit, and has a function to decrypt the input TS and output a decrypted TS. FIG. 2 illustrates an example in which a multi-card module (CAM 191 capable of decrypting multiple TSs) is connected to the CI slot of first I/F 131, whereas a single-card module (CAM 192 capable of decrypting only single TS) is connected to the CI slot of second I/F 132. However, each card module can be inserted into any CI slot (connected to any I/F). In each card module, a smart card is inserted that records, for example, subscriber information in relation to a user or other information. The smart card is, for example, sent from a broadcasting organization or other organization to the user. The user inserts the card module into which the smart card is inserted into the CI slot of broadcast receiver 100 for use. It is to be noted that the broadcast signals (TSs) of decryptable paid broadcasting in respective card modules inserted into respective CI slots are not necessarily identical to one another. In one possible example, a first card module can decrypt the broadcast signal from broadcasting station A, whereas a second card module cannot decrypt the broadcast signal from broadcasting station A and can decrypt the broadcast signal from broadcasting station B. In another possible example, a first card module can decrypt the broadcast signals from broadcasting station A and broadcasting station B, whereas a second card module cannot decrypt the broadcast signal from broadcasting station A and can decrypt the broadcast signals from broadcasting station B and broadcasting station C. While the broadcasting stations have been described by way of example, it is not necessarily needed to determine whether the broadcast signals can be decrypted on a broadcasting station-by-broadcasting station basis. First I/F 131 and second I/F 132 convey signals related to the decrypted TSs that are output from the card modules to switch 150. According to the DVB-CI Plus standard, when the signals related to the decrypted TSs from the card modules are further encrypted (locally encrypted between broadcast receiver 100 and the card modules) and conveyed, for example, the encrypted signals can be decrypted and used inside broadcast receiver 100, such as first I/F 131 and second I/F 132.

Decoder 140 includes an element such as a processor that decodes the TS. Decoder 140 has a function to decode the decrypted signal transmitted from switch 150, the decrypted signal being output from the card module connected to one of first I/F 131 and second I/F 132, and to determine whether a result of the decryption performed by the card module is normal or not. For example, decoder 140 reads encrypted data based on data indicating the presence or absence of the encryption included in a TS packet that constitutes the TS, and then examines whether the decryption has been performed correctly (normally). Decoder 140 has a function to output signals related to content as a result of decoding (such as a video signal and a voice signal) to outside of broadcast receiver 100 (to transmit the signals to display device 210 or the like) when a result of the decryption performed by the card module is normal. That is, decoder 140 can transmit the signal related to content to display device 210, and can transmit the signal related to content to recording device 220.

Switch 150 has a function to selectively input the TSs that are output from first receiving unit 111 and second receiving unit 112 into first I/F 131 and second I/F 132. That is, switch 150 has a function to switch whether to input each TS that is output from each receiving unit into first I/F 131 or second I/F 132 under control of controller 160. Switch 150 includes multiplexer (Mux) 151 and demultiplexer (Demux) 152. In switch 150, when multiple TSs are input into the I/F to which the multi-card module is connected among first I/F 131 and second I/F 132, Mux 151 multiplexes and inputs the multiple TSs. Also, switch 150 has a function to input into decoder 140 signals of decryption results performed by the card modules that are output from first I/F 131 and second I/F 132. In switch 150, Demux 152 separates, into multiple signals, the signal that is output from the I/F into which the TSs are multiplexed by and input from Mux 151, and then switch 150 transmits the separated signals to decoder 140. Here, switch 150 directly inputs, without via first I/F 131 or second I/F 132 into decoder 140, the TS that does not need to be decrypted by the card module among the TSs that are output from first receiving unit 111 and second receiving unit 112 under control of controller 160.

Controller 160 is implemented by, for example, a memory, a processor that executes the control program, and other devices, and controls each unit of broadcast receiver 100. Controller 160 has a function, for example, to control first receiving unit 111 and second receiving unit 112 in response to the user operation received by operation receiving unit 120, and to cause each of these receiving units to receive the broadcast signal in response to the channel selection operation of the user or other operations to output the TS. In addition, controller 160 has a function to specify (select) one of the TSs that are output from respective receiving units in accordance with a predetermined algorithm as a first TS with high priority, and to specify (select) the other TS as a second TS with relatively low priority. A result of selection of the first TS and the second TS is held, for example, in a storage medium, such as a nonvolatile memory. The user may be allowed to select the algorithm to be used for selection of the first TS and the second TS. In broadcast receiver 100, the high-priority first TS is a TS that should be processed with priority to prevent interruption of a flow of processing for receiving, decoding, and outputting the TS. Examples of a method for selecting the high-priority first TS include a method for fixedly selecting the TS that is output from first receiving unit 111 as the first TS, a method for selecting the TS that is decoded and is currently transmitted to display device 210 (that is, the TS currently watched by a user) as the first TS, a method for selecting the TS corresponding to a main screen as the first TS when display device 210 displays content related to multiple TSs (two screen displays including the main screen and a sub screen), and a method for selecting the TS that is currently recorded by recording device 220 as the first TS. In addition, controller 160 has a function to authenticate the card module connected to each of first I/F 131 and second I/F 132, and to determine whether the card module is a multi-card module or a single-card module based on information that is transmitted from the card module for authentication. In addition, controller 160 has a function to control switch 150 based on an authentication result of the card module inserted in each CI slot and on a selection result of the first TS. That is, controller 160 has a function to control switch 150 to input the first TS that is output from one of first receiving unit 111 and second receiving unit 112 into one I/F to which the multi-card module capable of decrypting multiple TSs is connected from among first I/F 131 and second I/F 132. In addition, controller 160 has a function, when a determination result of decoder 140 (determination result of whether the decryption is normal no not) is not normal based on a signal that is output from the card module connected to the one I/F, to change switch 150 to input the first TS into the other I/F of first I/F 131 and second I/F 132. In addition, controller 160 has a function, when the determination result of decoder 140 is normal based on the signal that is output from the multi-card module connected to one I/F to which the multi-card module is connected among first I/F 131 and second I/F 132, to control switch 150 to input, into the other I/F, the second TS that is output from one receiving unit that does not output the first TS from among first receiving unit 111 and second receiving unit 112. Controller 160 also has a function, when the determination result of decoder 140 is not normal based on the signal that is output from the card module connected to the other I/F, to change switch 150 to input the second TS into the I/F to which the multi-card module is connected. Controller 160 may control switch 150 or other devices, when controlling switch 150 to transmit the TS to each card module, to transmit the TS within a range of the maximum bit rate prescribed by the DBV-CI standard or other standards.

### [1-2. Operation]

An operation related to the CAMs in broadcast receiver 100 having the above-described configuration will be described below.

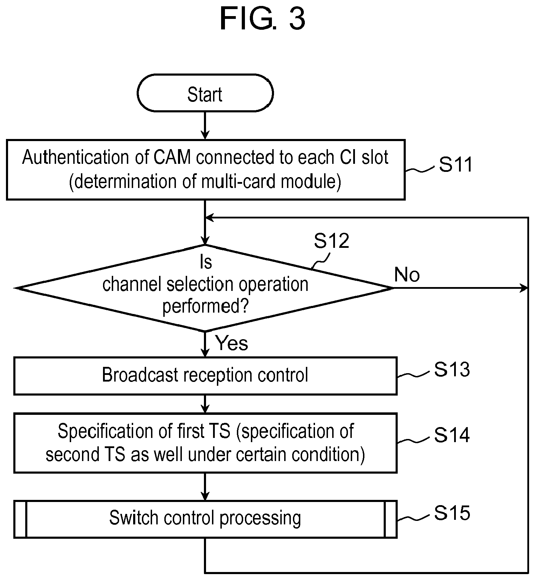

FIG. 3 is a flowchart illustrating an operational example of broadcast receiver 100.

First, in broadcast receiver 100, controller 160 authenticates the card modules (CAMs 191,192) connected to the CI slots of first I/F 131 and second I/F 132 in accordance with the DVB-CI Plus standard or other standards to determine whether each card module is a multi-card module (a CAM capable of decrypting a plurality of TSs) (step S11). Each card module is authenticated when broadcast receiver 100 is activated (when turned on) if the card module has already been inserted into the CI slot; otherwise, each card module may be authenticated when the card module is inserted into the CI slot. The following description is provided on an assumption that the multi-card module is inserted into a first CI slot of broadcast receiver 100 whereas the single-card module is inserted into a second CI slot.

In broadcast receiver 100, operation receiving unit 120 receives an operation of a user, and operation receiving unit 120 then conveys information related to the operation to controller 160. When the user performs a channel selection operation for selecting a broadcasting station (such as a channel) that broadcasts a broadcast program (content) the user wants to watch (step S12), controller 160 controls first receiving unit 111 or second receiving unit 112 according to the channel selection to receive the broadcast signal (step S13). The description here assumes that the broadcast signal received according to the channel selection of the user is an encrypted broadcast signal of paid broadcasting. The user may designate the broadcasting station that broadcasts the broadcast signal the user causes each receiving unit (first receiving unit 111 and second receiving unit 112) to receive, and controller 160 may control each receiving unit according to the user designation. Also, the user may simply designate the broadcasting station, and based on the broadcasting station which each receiving unit can receive, controller 160 may specify the broadcasting station that broadcasts the broadcast signal which each receiving unit is to receive and may control each receiving unit. The user can designate one or two broadcasting stations. For example, controller 160 can store information on the broadcasting station (such as a channel) of broadcasting which broadcast receiver 100 is receiving when broadcast receiver 100 is turned off last time; when broadcast receiver 100 is turned on, controller 160 can perform an operation similar to the operation performed when the user selects the stored broadcasting station. In channel selection operation, for example, the user may designate an output destination of the broadcast content (whether to display the broadcast content on display device 210 or to record the broadcast content in recording device 220).

Subsequently, controller 160 specifies (selects) the first TS according to the user operation based on the predetermined algorithm or the like, and when the user has designated two broadcasting stations, controller 160 further specifies (selects) the second TS lower than the first TS in priority (step S14). That is, controller 160 can select one of the TS that is output from first receiving unit 111 and the TS that is output from second receiving unit 112 as the first TS, and can select the other TS as the second TS. This selection is made based on the predetermined algorithm or the like. For example, when the user designates recording device 220 as the output destination of the broadcast content, controller 160 may select the TS related to the broadcast as the first TS. In the case where broadcast receiver 100 has a function to display two screens on display device 210 (to display two types of broadcast content) and defines a main screen and a sub screen, when the user designates the main screen of display device 210 as the output destination of the broadcast content, controller 160 may select the TS related to the broadcast as the first TS. For example, when the user designates only one broadcasting station and only one of first receiving unit 111 and second receiving unit 112 outputs the TS according to the designation, controller 160 may specify (select) the one TS as the first TS. For example, after specifying only this first TS, controller 160 may specify (select) the TS related to the one broadcasting station designated by the user as the second TS.

Next, controller 160 performs switch control processing to control switch 150 to input the TS that is output from each of first receiving unit 111 and second receiving unit 112 into one of first I/F 131 and second I/F 132 (step S15). Broadcast receiver 100 performs processing from step S13 to step S15 every time the user performs the channel selection operation (step S12).

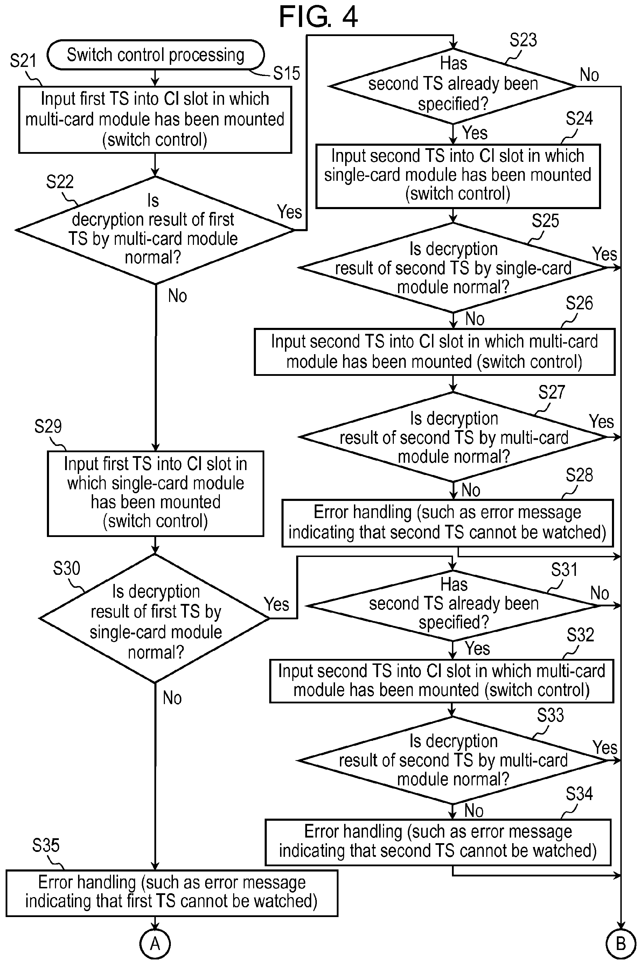

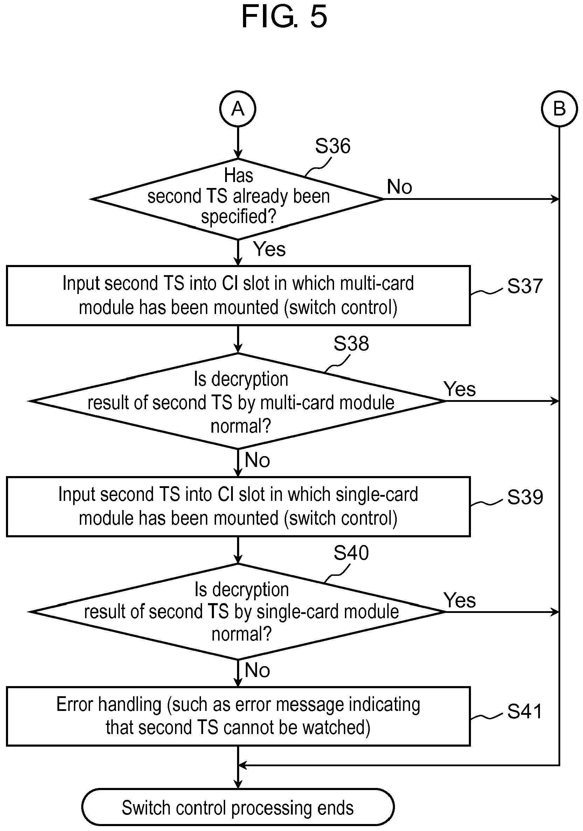

FIG. 4 and FIG. 5 are flowcharts illustrating the switch control processing in broadcast receiver 100 (step S15 of FIG. 3). The switch control processing will be described below with reference to FIG. 4 and FIG. 5.

First, controller 160 controls switch 150 to input the first TS specified (selected) in the above-described step S14 into the I/F that has the CI slot into which the multi-card module is inserted (mounted) among first I/F 131 and second I/F 132 (step S21). In the above-described step S11, controller 160 determines whether the card module inserted (connected) into the CI slot of each of first I/F 131 and second I/F 132 is the multi-card module or the single-card module, and thus a result of the determination is used in step S21. For convenience of description, the description here assumes that multi-card module 191 is inserted into the CI slot of first I/F 131, whereas single-card module 192 is inserted into the CI slot of second I/F 132 (refer to FIG. 2). Control of switch 150 in step S21 causes the first TS that is output from one of first receiving unit 111 and second receiving unit 112 to be input into first I/F 131 by switch 150, and to be transmitted to multi-card module 191. Accordingly, the first TS will be decrypted by multi-card module 191, and then a signal related to the decrypted TS will be transmitted to decoder 140 via first I/F 131 and switch 150.

Subsequent to step S21, controller 160 acquires, from decoder 140, the determination result of whether the decryption result of the first TS by multi-card module 191 is normal or not (step S22); when the determination result indicates normal, the processing advances to step S23. When the determination result is not normal (that is, when multi-card module 191 fails to decrypt the first TS correctly), the processing advances to step S29.

In step S23, controller 160 determines whether the second TS has already been specified (selected); when the second TS has not been specified yet, controller 160 ends the switch control processing. Here, when the determination result indicates normal in step S22, the first TS is decoded by decoder 140 and is output from broadcast receiver 100, for example, to display device 210 or the like. When the second TS has already been specified in the above-described step S14, controller 160 controls switch 150 to input the second TS into the I/F that has the CI slot into which the single-card module is inserted (mounted) among first I/F 131 and second I/F 132 (step S24). Control of switch 150 in step S24 causes the second TS to be input into second I/F 132 by switch 150, and to be transmitted to single-card module 192, the second TS being output from the receiving unit that does not output the first TS among first receiving unit 111 and second receiving unit 112. Accordingly, the second TS will be decrypted by single-card module 192, and then the signal related to the decrypted TS will be transmitted to decoder 140 via second I/F 132 and switch 150.

Subsequent to step S24, controller 160 acquires, from decoder 140, the determination result of whether the decryption result of the second TS by single-card module 192 is normal or not (step S25); when the determination result indicates normal, controller 160 ends the switch control processing. When the determination result indicates normal, each of the signal related to the first TS decrypted by multi-card module 191 and the signal related to the second TS decrypted by single-card module 192 is decoded by decoder 140, and is then output from broadcast receiver 100, for example, to display device 210 or the like. As a result, for example, display device 210 can display the broadcast content related to the first TS and the broadcast content related to the second TS by the two-screen display function.

When the determination result acquired from decoder 140 is not normal in step S25 (that is, when single-card module 192 fails to decrypt the second TS correctly), the decryption may become possible by a change in a combination of respective TSs that are output from first receiving unit 111 and second receiving unit 112, and respective card modules that decrypt the encrypted signals related to the TSs. For this reason, controller 160 advances to the processing of step S26.

In step S26, controller 160 controls switch 150 to input the second TS into the I/F that has the CI slot into which the multi-card module is inserted (mounted) among first I/F 131 and second I/F 132 (step S26). In this case, since the first TS is already input from switch 150 into first I/F 131 to which multi-card module 191 is connected in step S21, controller 160 controls switch 150 to multiplex the first TS and the second TS with multiplexer (Mux) 151 to input the multiplexed first TS and second TS into first I/F 131. In this case, in view of relatively high priority of the first TS, for example, it is useful to multiplex the second TS while keeping a bandwidth of the first TS that is already input into first I/F 131 from becoming narrow. That is, when controller 160 inputs the second TS into the multi-card module while controlling switch 150 to input the first TS into the multi-card module, it is useful to control switch 150 to input the second TS into the multi-card module while keeping the bandwidth used for input of the first TS. For example, however, the bandwidth used by the first TS and the second TS may be arbitrarily determined within a range of a bit rate of maximum 96 Mbps prescribed by the DVB-CI Plus standard. Control of switch 150 in step S26 causes the first TS and the second TS that are output from first receiving unit 111 and second receiving unit 112 to be input into first I/F 131 by switch 150, and to be transmitted to multi-card module 191. Even if the second TS is additionally input into multi-card module 191, the first TS that is being decrypted by multi-card module 191 is decoded by decoder 140 without interruption, and is then output from broadcast receiver 100. Control of switch 150 in step S26 causes the second TS to be decrypted by multi-card module 191 as well, and then the signal related to the decrypted TS is transmitted to decoder 140 via first I/F 131 and switch 150.

Subsequent to step S26, controller 160 acquires, from decoder 140, the determination result of whether the decryption result of the second TS by multi-card module 191 is normal or not (step S27); when the determination result indicates normal, controller 160 ends the switch control processing. In this case, each of the first TS and the second TS decrypted by multi-card module 191 is decoded by decoder 140, and is then output from broadcast receiver 100, for example, to display device 210 or the like.

When the determination result acquired from decoder 140 in step S27 is not normal (that is, when multi-card module 191 fails to decrypt the second TS correctly), controller 160 performs error handling such as outputting an error message indicating that the second TS cannot be watched (step S28), and then controller 160 ends the switch control processing. In this case, the first TS decrypted by multi-card module 191 is decoded by decoder 140 and is output from broadcast receiver 100 without interruption. It is to be noted that the error message indicating that the second TS cannot be watched may be displayed, for example, on display device 210.

In step S29, in order to verity that the first TS can be decrypted correctly by single-card module 192, controller 160 controls switch 150 to input the first TS into the I/F that has the CI slot into which the single-card module is inserted (mounted) among first I/F 131 and second I/F 132. Control of switch 150 in step S29 causes the first TS that is output from one of first receiving unit 111 and second receiving unit 112 to be input into second I/F 132 by switch 150, and to be transmitted to single-card module 192. Accordingly, the first TS is decrypted by single-card module 192, and the signal related to the decrypted TS will be transmitted to decoder 140 via second I/F 132 and switch 150.

Subsequent to step S29, controller 160 acquires, from decoder 140, the determination result of whether the decryption result of the first TS by single-card module 192 is normal or not (step S30); when the determination result indicates normal, the processing advances to step S31. When the determination result is not normal (that is, when single-card module 192 fails to decrypt the first TS correctly), the processing advances to step S35.

In step S31, controller 160 determines whether the second TS has already been specified (selected); when the second TS has not been specified yet, controller 160 ends the switch control processing. In step S30, when the determination result indicates normal, the first TS is decoded by decoder 140 and is then output from broadcast receiver 100, for example, to display device 210 or the like. When the second TS has already been specified in the above-described step S14, controller 160 controls switch 150 to input the second TS into the I/F that has the CI slot into which the multi-card module is inserted (mounted) among first I/F 131 and second I/F 132 (step S32). Control of switch 150 in step S32 causes the second TS to be input into first I/F 131 by switch 150, and to be transmitted to multi-card module 191, the second TS being output from the receiving unit that does not output the first TS among first receiving unit 111 and second receiving unit 112. Accordingly, the second TS will be decrypted by multi-card module 191, and then the signal related to the decrypted TS will be transmitted to decoder 140 via first I/F 131 and switch 150.

Subsequent to step S32, controller 160 acquires, from decoder 140, the determination result of whether the decryption result of the second TS by multi-card module 191 is normal or not (step S33); when the determination result indicates normal, controller 160 ends the switch control processing. When this determination result indicates normal, each of the signal related to the first TS decrypted by single-card module 192 and the signal related to the second TS decrypted by multi-card module 191 is decoded by decoder 140, and is then output from broadcast receiver 100, for example, to display device 210 or the like.

When the determination result acquired from decoder 140 in step S33 is not normal (that is, when multi-card module 191 fails to decrypt the second TS correctly), controller 160 performs the error handling such as outputting the error message indicating that the second TS cannot be watched (step S34), and then controller 160 ends the switch control processing.

Also, in step S35, controller 160 performs the error handling such as outputting the error message indicating that the first TS cannot be watched.

Subsequently, controller 160 determines whether the second TS has already been specified (selected) (step S36); when the second TS has not been specified yet, controller 160 ends the switch control processing. When the second TS has already been specified in the above-described step S14, controller 160 controls switch 150 to input the second TS into the I/F that has the CI slot into which the multi-card module is inserted (mounted) among first I/F 131 and second I/F 132 (step S37). Control of switch 150 in step S37 causes the second TS to be input into first I/F 131 by switch 150, and to be transmitted to multi-card module 191, the second TS being output from the receiving unit that does not output the first TS among first receiving unit 111 and second receiving unit 112. Accordingly, the second TS will be decrypted by multi-card module 191, and the signal related to the decrypted TS will be transmitted to decoder 140 via first I/F 131 and switch 150.

Subsequent to step S37, controller 160 acquires, from decoder 140, the determination result of whether the decryption result of the second TS by multi-card module 191 is normal or not (step S38); when the determination result indicates normal, controller 160 ends the switch control processing.

When the determination result acquired from decoder 140 in step S38 is not normal (that is, when multi-card module 191 fails to decrypt the second TS correctly), controller 160 advances to the processing in step S39.

In step S39, in order to verify that the second TS can be decrypted correctly by single-card module 192, controller 160 controls switch 150 to input the second TS into the I/F that has the CI slot into which the single-card module is inserted (mounted) among first I/F 131 and second I/F 132. Control of switch 150 in step S39 causes the second TS that is output from one of first receiving unit 111 and second receiving unit 112 to be input into second I/F 132 by switch 150, and to be transmitted to single-card module 192. Accordingly, the second TS will be decrypted by single-card module 192, and the signal related to the decrypted TS will be transmitted to decoder 140 via second I/F 132 and switch 150.

Subsequent to step S39, controller 160 acquires, from decoder 140, the determination result of whether the decryption result of the second TS by single-card module 192 is normal or not (step S40); when the determination result indicates normal, controller 160 ends the switch control processing. When the determination result indicates normal, the signal related to the second TS decrypted by single-card module 192 is decoded by decoder 140, and is then output from broadcast receiver 100, for example, to display device 210 or the like.

When the determination result acquired from decoder 140 in step S40 is not normal (that is, when single-card module 192 fails to decrypt the second TS correctly), controller 160 performs the error handling such as outputting the error message indicating that the second TS cannot be watched (step S41), and then controller 160 ends the switch control processing.

The above-described switch control processing and other processing implement an input method for selectively inputting the TS into each card module in broadcast receiver 100 to which the plurality of card modules are mounted (connected) and which decodes the signal that is output from each card module. This input method is used in selection input processing (such as the switch control processing) to be performed by the processor of broadcast receiver 100. This input method is, for example, as a first step, to input the first TS into the multi-card module capable of decrypting the plurality of TSs among the card modules mounted (connected) to broadcast receiver 100. Next, as a second step, this input method is, after performing the input in the first step, to determine whether the result of the decryption performed by the multi-card module is normal or not based on the signal that is output from the multi-card module; when the determination result is not normal, this input method is to input the first TS into the card module (single-card module) other than the multi-card module among the card modules. Next, as a third step, when the determination is made in the second step that the result of the decryption performed by the multi-card module is normal based on the signal that is output from the multi-card module, this input method is to input the second TS other than the first TS into the card module other than the multi-card module. Next, in a fourth step, after performing the input in the third step, this input method is to determine whether the result of the decryption performed by the card module other than the multi-card module is normal or not based on the signal that is output from the card module other than the multi-card module; when the determination result is not normal, this input method is to input the second TS into the multi-card module among the card modules.

### [1-3. Effects and the like]

Broadcast receiver 100 controls switch 150 to input the high-priority first TS into the I/F corresponding to the CI slot into which the multi-card module is inserted (mounted) with priority among first I/F 131 and second I/F 132. Accordingly, while the first TS is decrypted by the card module inserted into one CI slot, is decoded by decoder 140, and is output to display device 210 or the like, even when the card module inserted into the other CI slot fails to decrypt the second TS normally, it becomes possible to verify whether the other card module can decrypt the second TS without interruption of the first TS that is already being output.

It is assumed that the broadcast receiver performs control to first input the high-priority first TS into the I/F corresponding to the CI slot into which the single-card module is inserted. In this case, when the multi-card module fails to decrypt the low-priority second TS, verification should be made whether changing correspondence between two TSs and two card modules enables appropriate decryption. Inputting the second TS into the single-card module for decryption in order to perform this verification causes interruption of the signal related to the first TS which is being decrypted by the single-card module, decoded by the decoder, and output from the broadcast receiver. This is because the single-card module cannot decrypt the plurality of TSs. Different from this assumed case, broadcast receiver 100 performs control to first input the first TS into the I/F corresponding to the CI slot into which the multi-card module is inserted, inhibiting interruption of the signal related to the first TS.

As described above, the broadcast receiving system including broadcast receiver 100 enables watching of paid broadcasting when the single-card module is connected to one interface of two interfaces (CI slots) and the multi-card module is connected to the other interface, and the broadcast receiving system can inhibit interruption of output of the content related to the decrypted TS.

### OTHER EXEMPLARY EMBODIMENTS

As described above, the first exemplary embodiment has been described as illustration of a technique to be disclosed in this application. However, the technique in the present disclosure is not limited to the first exemplary embodiment, and the technique can be properly applied to exemplary embodiments to which changes, replacements, additions, and omissions are made.

While it is assumed that broadcast receiver 100 described in the first exemplary embodiment is an STB, broadcast receiver 100 is not limited to the STB that has an independent enclosure, and may be part of a television receiver that has a display screen, or part of a recording device (such as a recording-playback device). For example, broadcast receiver 100 may contain display device 210 or recording device 220. Respective components of broadcast receiver 100 do not need to be provided inside one enclosure, and for example, may be divided into separate enclosures if the components can work in cooperation with one another.

Also, in the first exemplary embodiment, in response to the user operation received by operation receiving unit 120, controller 160 specifies (selects) the TS that is output from either of first receiving unit 111 and second receiving unit 112 as the first TS to control switch 150; however, the selection of the first TS (or selection of the second TS) does not necessarily need to be performed in response to the user operation. For example, controller 160 may fixedly select the TS that is output from first receiving unit 111 receiving the broadcast signal as the first TS, whereas controller 160 may fixedly select the TS that is output from second receiving unit 112 receiving the broadcast signal as the second TS. Also, controller 160 may change the TS that has once been selected as the second TS to the first TS in response to the user operation. For example, while display device 210 displays the broadcast content related to the first TS and the broadcast content related to the second TS by the two-screen display function, when the user performs an operation for stopping display of the first TS and switching to one-screen display, controller 160 may determine the TS that has been selected as the second TS as the first TS, and may then perform the switch control processing (refer to FIG. 4 and FIG. 5). Since the switch control processing can change the output content of broadcast receiver 100, it is useful to perform the switch control processing, for example, at timing when the user operation is performed.

Also, while the first exemplary embodiment describes the example in which the multi-card module and the single-card module can be inserted (mounted) into any CI slot of broadcast receiver 100, the CI slot into which the multi-card module can be inserted and the CI slot into which the single-card module can be inserted may be determined in advance. Also, broadcast receiver 100 may have a configuration other than the configuration described in the aforementioned exemplary embodiment (for example, another CI slot).

Also, respective functional components (functional blocks) in broadcast receiver 100 may be individually integrated into one chip by using a semiconductor device, such as an integrated circuit (IC) and large scale integration (LSI), or may be integrated into one chip to contain part or all of the functional components. Also, a method of circuit integration is not limited to LSI, and circuit integration may be implemented using a dedicated circuit or a general-purpose processor. A field programmable gate array (FPGA), which is programmable after manufacture of an LSI, or a reconfigurable processor, in which connections or settings of circuit cells within the LSI are reconfigurable, may be used. Furthermore, if an advance in semiconductor technologies or other related technologies yields a circuit integration technology that can substitute for LSI, the functional blocks may be integrated using such a technology. For example, adaptation of biotechnology may be possible.

Also, all or part of various processing steps described above (for example, procedures illustrated in FIG. 3 to FIG. 5) may be implemented by hardware, such as electronic circuitry, and may be implemented using software. The processing by means of software is implemented by a processor included in the broadcast receiver executing a control program stored in a memory. Also, the control program may be recorded in a recording medium to be distributed or circulated. For example, installing the distributed control program in the broadcast receiver and causing the processor of the broadcast receiver to execute the control program enable the broadcast receiver to perform various processing steps (for example, the processing illustrated in FIG. 3 to FIG. 5).

In addition, embodiments implemented by arbitrarily combining components and functions described in the aforementioned exemplary embodiment are also included in the scope of the present disclosure.

### INDUSTRIAL APPLICABILITY

The present disclosure is applicable to the broadcast receiver including the plurality of CI slots.

### REFERENCE MARKS IN THE DRAWINGS

- 100: BROADCAST RECEIVER
- 111: FIRST RECEIVING UNIT
- 112: SECOND RECEIVING UNIT
- 120: OPERATION RECEIVING UNIT
- 131: FIRST INTERFACE (I/F)
- 132: SECOND INTERFACE (I/F)
- 140: DECODER
- 150: SWITCH
- 160: CONTROLLER
- 191: CAM (MULTI-CARD MODULE)
- 192: CAM (SINGLE-CARD MODULE)
- 210: DISPLAY DEVICE
- 220: RECORDING DEVICE

## Claims

1. A broadcast receiver comprising:
a first receiving unit that receives a broadcast signal and outputs a transport stream;
a second receiving unit that receives a broadcast signal and outputs a transport stream;
a first interface connected with a card module that decrypts an input transport stream and outputs a decrypted signal, the first interface inputting the input transport stream into the card module;
a second interface connected with a card module that decrypts an input transport stream and outputs a decrypted signal, the second interface inputting the input transport stream into the card module;
a switch that selectively inputs the transport streams that are output from the first receiving unit and the second receiving unit into the first interface and the second interface;
a decoder that decodes a signal that is output from the card module connected to one of the first interface and the second interface to determine whether a result of decryption performed by the card module is normal or not; and
a controller that controls the switch to input a first transport stream that is output from one receiving unit of the first receiving unit and the second receiving unit into one interface of the first interface and the second interface to which a multi-card module capable of decrypting a plurality of transport streams is connected, when a determination result of the decoder is not normal based on a signal that is output from the multi-card module connected to the one interface, the controller changing the switch to input the first transport stream into the other interface of the first interface and the second interface.

2. The broadcast receiver according to claim 1, wherein
when the determination result of the decoder is normal based on the signal that is output from the multi-card module connected to the one interface, the controller controls the switch to input, into the other interface, a second transport stream that is output from the receiving unit of the first receiving unit and the second receiving unit that does not output the first transport stream, and
when the determination result of the decoder is not normal based on the signal that is output from the card module connected to the other interface, the controller changes the switch to input the second transport stream into the one interface.

3. The broadcast receiver according to claim 2, wherein while the controller controls the switch to input the first transport stream into the multi-card module, when inputting the second transport stream into the multi-card module, the controller controls the switch to input the second transport stream into the multi-card module while keeping a bandwidth used for input of the first transport stream.

4. The broadcast receiver according to any one of claims 1 to 3, further comprising an operation receiving unit that receives a user operation,
wherein in response to the user operation received by the operation receiving unit, the controller selects the transport stream that is output from one of the first receiving unit and the second receiving unit as the first transport stream to perform the control of the switch.

5. The broadcast receiver according to any one of claims 1 to 3, wherein the controller selects the transport stream that is output from the first receiving unit as the first transport stream to perform the control of the switch.

6. The broadcast receiver according to any one of claims 1 to 5, wherein when the result of the decryption performed by the card module is normal, the decoder transmits a result of the decoding to a display device.

7. An input method for selectively inputting transport streams into a plurality of card modules in a broadcast receiver connected with the card modules each of which decrypts input transport stream and outputs decrypted signal, the broadcast receiver decoding signal that is output from each of the card modules,
the input method comprising:
a first step of inputting a first transport stream into a multi-card module capable of decrypting a plurality of transport streams among the card modules connected to the broadcast receiver; and
a second step of determining whether a result of decryption performed by the multi-card module is normal or not based on a signal that is output from the multi-card module after performing the input in the first step, and inputting the first transport stream into a card module other than the multi-card module among the card modules when a result of the determination is not normal.

8. The input method according to claim 7, further comprising:
a third step of inputting a second transport stream other than the first transport stream into the card module other than the multi-card module, when the determination is made that the result of the decryption performed by the multi-card module is normal based on the signal that is output from the multi-card module in the second step; and
a fourth step of, after performing the input in the third step, determining whether the result of the decryption performed by the card module other than the multi-card module is normal or not based on the signal that is output from the card module other than the multi-card module, and inputting the second transport stream into the multi-card module among the card modules when the result of the determination is not normal.

9. A control program for causing a microprocessor in a broadcast receiver to perform selection input processing for selectively inputting transport streams into a plurality of card modules, the broadcast receiver being connected with the card modules each of which decrypts input transport stream and outputs decrypted signal and decoding signal that is output from each of the card modules,
the selection input processing comprising:
a first step of inputting a first transport stream into a multi-card module capable of decrypting a plurality of transport streams among the card modules connected to the broadcast receiver; and
a second step of determining whether a result of decryption performed by the multi-card module is normal or not based on a signal that is output from the multi-card module after performing the input in the first step, and inputting the first transport stream into a card module other than the multi-card module among the card modules when a result of the determination is not normal.
